# EUROPEAN PATENT SPECIFICATION

(11) **EP 4 112 981 B1**
(45) Date of publication and mention of the grant of the patent: **08.05.2024**
(21) Application number: 22167247.0
(22) Date of filing: 07.04.2022
(51) Int. Cl.: F16K 27/02, F16K 31/04

(54) **ELECTRIC VALVE**
ELEKTRISCHES VENTIL
SOUPAPE ÉLECTRIQUE

(30) Priority: 28.06.2021 JP 2021106267
(43) Date of publication of application: 04.01.2023
(73) Proprietor: Pacific Industrial Co., Ltd., Ogaki-shi, Gifu-ken 503-8603 (JP)
(72) Inventor: HAYASHI, Hisao, Ogaki-shi, 503-8603 (JP)
(74) Representative: Kramer Barske Schmidtchen Patentanwälte PartG mbB

(56) References cited:
- JP-A- 2012 237 342
- US-A1- 2006 175 565
- US-A1- 2016 146 366

## Description

### Technical Field

The present disclosure relates to an electric valve having a distal end side inserted into a valve attachment hole opened to an outer surface of a valve attachment target member and having a motor, which is a drive source, on a proximal end side.

### Background Art

Conventionally, as this type of electric valve, an electric valve having a rotor case that accommodates a rotor of a motor, and in which a tubular stator is fitted to the outer side of the rotor case is known (see e.g., Patent Document 1). US 2016/0146366 A1 discloses a control valve including a shaft, a stopper mechanism, and a can, in which a stator coil is coaxially mounted around the can.

### Related Art Document

### Patent Document

Patent Document 1: JP 2016 -65595 A (Figs. 1 and 3)

### Summary of the Invention

### Technical Problem to be Solved by the Invention

It is required to enhance the waterproof property of the motor with respect to the conventional electric valve described above.

### Means of Solving the Problem

An invention of Claim 1 provided to solve the above problem relates to an electric valve having a distal end side configured to be inserted into a valve mounting hole opened in an outer surface of a valve attachment target member having a flow path therein and having a motor as a drive source on a proximal end side, and being capable of changing a flow rate of a fluid flowing through the flow path, the electric valve including a valve body having a rotor case extending in an axial direction of the valve mounting hole and accommodating a rotor of the motor on the proximal end side; a stator having a tubular shape with one end bottomed and an other end opened, the stator being fitted to an outer side of the rotor case; a stator facing portion that is formed by enlarging a diameter of an intermediate position in the axial direction of the valve body and that faces the stator in the axial direction; a tubular portion that is provided integrally with the stator and projects out toward the stator facing portion; and an annular seal member that is sandwiched between the stator facing portion and the tubular portion in the axial direction and restricts water from entering the inside of the stator; where the valve body includes a first body sleeve having an in-valve flow path communicating with the flow path, and a second body sleeve assembled to the inner side of the first body sleeve and having the rotor case fixed to a proximal end portion; and a fitting gap between an inner surface of the first body sleeve and an outer surface of the second body sleeve is open on a surface of the stator facing portion facing the stator and is covered by the seal member.

### Brief Description of Drawings

Fig. 1 is a perspective view of an electric valve according to a first embodiment.
Fig. 2 is a cross-sectional side view of the electric valve.
Fig. 3 is a cross-sectional side view in which part of the electric valve is enlarged.
Fig. 4 is a cross-sectional side view of a seal structure of a lower portion of a stator.
Fig. 5 is a perspective view of the stator as viewed from below.
Fig. 6 is a cross-sectional side view of a seal structure in an electric valve of a second embodiment.
Fig. 7 is a cross-sectional side view of a seal structure in an electric valve of a third embodiment.
Fig. 8 is a cross-sectional side view of a seal structure in an electric valve of a fourth embodiment.
Fig. 9 is a cross-sectional side view of an electric valve of a first modified example.
Fig. 10 is a cross-sectional side view of an electric valve of a second modified example.

### Description of Embodiments

### [First Embodiment]

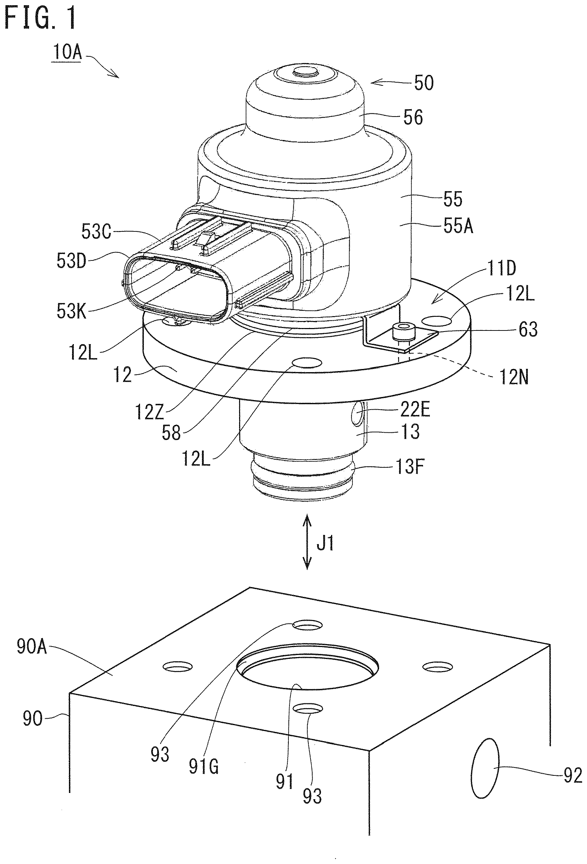

Hereinafter, an electric valve 10A according to a first embodiment of the present disclosure will be described with reference to Figs. 1 to 5. The electric valve 10A of the present embodiment illustrated in Fig. 1 is used by inserting the distal end side into a valve mounting hole 91 opened in an outer surface 90A of a valve attachment target member 90.

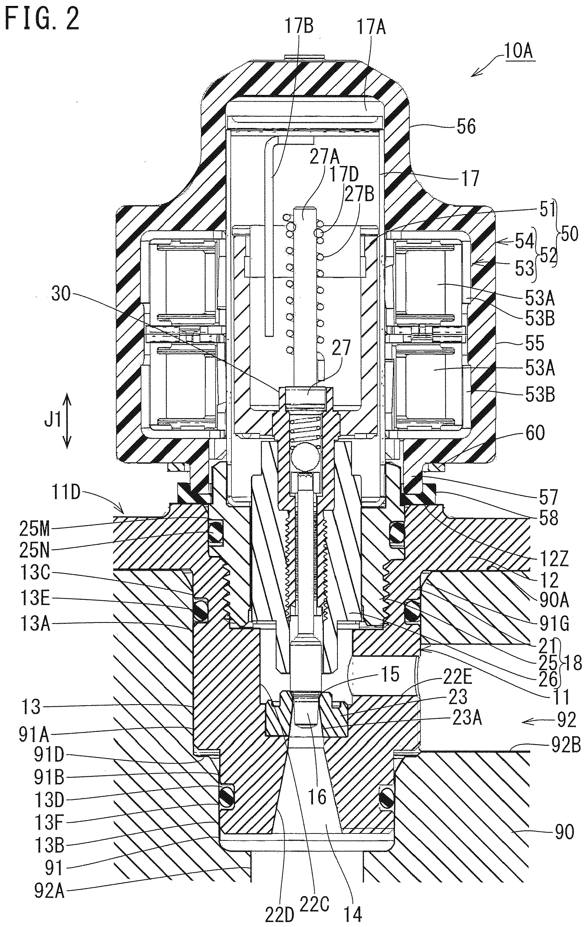

In Figs. 1 and 2 and the like, the axial directions of the valve mounting hole 91 and the electric valve 10A are oriented in the vertical direction, but the electric valve 10A may be used with the axial direction thereof oriented in a direction other than the vertical direction. In the following description, the axial direction of the valve mounting hole 91 is referred to as "vertical direction J1", where the upper side in Figs. 1 and 2 and the like is simply referred to as "upper side", and the opposite side is simply referred to as "lower side".

The valve attachment target member 90 is one part of a fluid equipment, and interiorly includes a flow path 92. As illustrated in Fig. 2, the valve mounting hole 91 has a stepped portion 91D at a position near the lower end, where an upper side of the stepped portion 91D forms a large diameter portion 91A and a lower side forms a small diameter portion 91B. The flow path 92 includes a first flow path 92A extending from the small diameter portion 91B on a downward extension line and a second flow path 92B extending laterally from a position near the stepped portion 91D of the large diameter portion 91A. Furthermore, a tapered introduction surface 91G for introducing an O-ring 13E to be described later into the valve mounting hole 91 is formed at an opening edge of the valve mounting hole 91.

Specific examples of the valve attachment target member 90 include an air conditioner, a gas stove, and a hydraulic equipment, but any fluid equipment may be used. The fluid flowing through the flow path 92 may be a gas, liquid, or an intermediate between a liquid and a gas such as a refrigerant of an air conditioner.

The electric valve 10A has a valve body 11 extending in the vertical direction J1. The valve body 11 has a flange portion 12 protruding laterally from an intermediate position in the vertical direction J1. The lower side of the flange portion 12 serves as an insertion portion 13 to be inserted into the valve mounting hole 91. The insertion portion 13 includes a large diameter portion 13A and a small diameter portion 13B corresponding to the large diameter portion 91A and the small diameter portion 91B of the valve mounting hole 91. O-ring grooves 13C and 13D that receive the O-rings 13E and 13F are respectively provided at a position near the flange portion 12 of the large diameter portion 13A and a substantially central position of the small diameter portion 13B in the vertical direction J1. Then, the small diameter portion 13B of the insertion portion 13 is fitted into the small diameter portion 91B of the valve mounting hole 91, and the large diameter portion 13A of the insertion portion 13 is fitted into the large diameter portion 91A of the valve mounting hole 91.

An in-valve flow path 14 that communicates between the first flow path 92A and the second flow path 92B of the valve mounting hole 91 is provided inside the valve body 11. Then, a valve element 16 that linearly moves in the vertical direction J1 enters the intermediate position of the in-valve flow path 14, and the flow rate of the fluid passing through the in-valve flow path 14 is controlled.

As a drive source for linearly moving the valve element 16, a motor 50 is provided at an upper end portion of the electric valve 10A. The rotor 51 of the motor 50 is accommodated in a rotor case 17 provided above the flange portion 12 of the valve body 11, and the stator 52 of the motor 50 is fitted to the outer side of the rotor case 17.

Specifically, the rotor case 17 has a thin cylindrical structure extending in the vertical direction, and an upper end portion thereof is closed by a cap 17A. The valve body 11 is formed by fixing a lower end portion of the rotor case 17 to an upper end portion of the valve body main body 18.

The valve body main body 18 has a structure in which a second body sleeve 25 is assembled to an inner side of a first body sleeve 21 and a third body sleeve 26 is assembled to the inner side the second body sleeve 25.

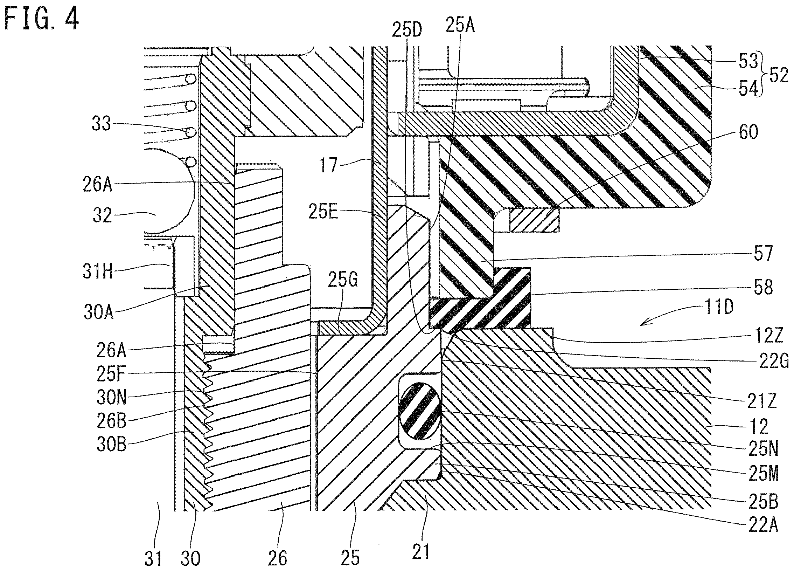

The first body sleeve 21 includes the flange portion 12 and the insertion portion 13 described above. As illustrated in Fig. 1, the flange portion 12 has, for example, a disk shape and protrudes laterally from the upper end portion of the first body sleeve 21, where the outer diameter thereof is larger than the outer diameter of the stator 52. In a range outside the outer diameter of the stator 52 in the flange portion 12, a plurality of attachment holes 12L penetrating in the vertical direction J1 is provided at positions equally dividing the circumferential direction into plurals, and a screw hole 12N for fixing the stator 52 to the valve body 11 is provided. Further, as illustrated in Fig. 4, a pedestal portion 12Z in which an inner edge portion is projected out in a stepped manner is provided on an upper surface of the flange portion 12, and a corner portion between a side surface of the pedestal portion 12Z and an upper surface of the flange portion 12 on the outer side of the pedestal portion 12Z is R-chamfered. The flange portion 12 is not limited to a circular shape, and may be an elliptical shape, a polygonal shape, or the like. In addition, the attachment hole 12L may be a counterbore hole.

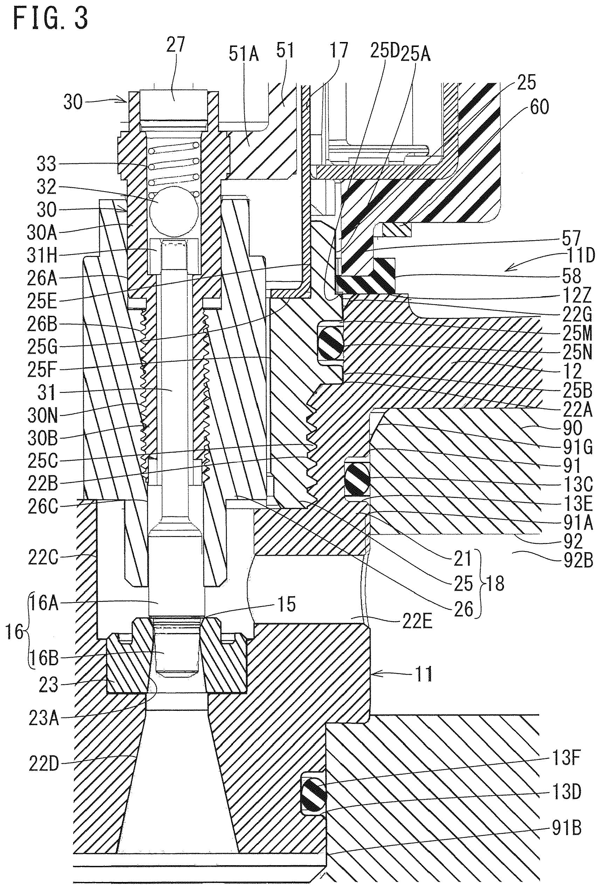

As illustrated in Fig. 3, the inside of the first body sleeve 21 includes a first inner diameter portion 22A, a female screw portion 22B, a second inner diameter portion 22C, and a tapered portion 22D in order from the upper side. The diameter is gradually reduced from the first inner diameter portion 22A toward the second inner diameter portion 22C, and the tapered portion 22D is increased in diameter as it separates away from the second inner diameter portion 22C. A valve seat member 23 is fitted and fixed to an end portion of the second inner diameter portion 22C on the tapered portion 22D side, and a tapered through-hole 23A continuous with the tapered portion 22D is formed in the valve seat member 23. Further, a branch hole 22E extends laterally from the second inner diameter portion 22C. The tapered portion 22D, the second inner diameter portion 22C, the through-hole 23A, and the branch hole 22E form the in-valve flow path 14 described above. An upper end of the through-hole 23A of the valve seat member 23 forms the valve port 15, and the valve element 16 described above enters the valve port 15 from the second inner diameter portion 22C side.

The outer surface of the second body sleeve 25 includes a first outer diameter portion 25A, a second outer diameter portion 25B, and a male screw portion 25C in order from the upper side. As illustrated in Fig. 4, the outer diameter of the second outer diameter portion 25B is slightly larger than the outer diameter of the first outer diameter portion 25A, and a stepped surface 25D is formed between the first outer diameter portion 25A and the second outer diameter portion 25B. The second outer diameter portion 25B is provided with an O-ring groove 25M that receives the O-ring 25N. In order to introduce the O-ring 25 N into the first body sleeve 21, a corner portion where the inner surface of the first inner diameter portion 22A intersects the upper surface (specifically, the upper surface of the pedestal portion 12Z) of the flange portion 12 is C-chamfered to form an introduction surface 22G. As illustrated in Fig. 3, the male screw portion 25C of the second body sleeve 25 is screwed into the female screw portion 22B of the first body sleeve 21, and the circumferential surfaces between the second outer diameter portion 25B of the second body sleeve 25 and the first inner diameter portion 22A of the first body sleeve 21 is sealed by the O-ring 25N. In a state where the second body sleeve 25 is assembled to the first body sleeve 21, as illustrated in Fig. 4, the stepped surface 25D of the second body sleeve 25 and the upper surface of the pedestal portion 12Z of the flange portion 12 of the first body sleeve 21 are substantially flush with each other.

In the inner side of the second body sleeve 25, the inner side of the first outer diameter portion 25A is a large diameter portion 25E, and the lower side of the first outer diameter portion 25A is a small diameter portion 25F. The rotor case 17 is fitted to the inner side of the large diameter portion 25E and abutted against a step surface 25G between the large diameter portion 25E and the small diameter portion 25F. In addition, the third body sleeve 26 is fixed to the small diameter portion 25F in a fitted state. As illustrated in Fig. 3, the lower end portion of the third body sleeve 26 projects out from the lower surface of the second body sleeve 25 into the second inner diameter portion 22C. The upper end portion of the third body sleeve 26 projects upward from the stepped surface 25G of the second body sleeve 25. In addition, a first inner diameter portion 26A, a female screw portion 26B, and a second inner diameter portion 26C are provided in order from the upper side at the center portion of the third body sleeve 26, where the diameter gradually decreases from the upper side to the lower side. The valve body 11 has been described above.

As described above, the rotor 51 of the motor 50 is accommodated inside the rotor case 17 provided in the valve body 11. The rotor 51 is a magnet having a cylindrical shape with a bottomed lower end, and is magnetized such that N poles and S poles are alternately arranged in the circumferential direction.

A rotary sleeve 30 is fixed to a center portion of a bottom wall 51A of the rotor 51. The rotary sleeve 30 has a structure in which a small diameter tubular portion 30B extends downward from a large diameter tubular portion 30A. A position near the upper end of the large diameter tubular portion 30A is fixed in a state of penetrating the bottom wall 51A of the rotor 51, a lower side portion of the rotor 51 in the large diameter tubular portion 30A is rotatably supported by the first inner diameter portion 26A of the third body sleeve 26, and a male screw portion 30N formed on the outer surface of the small diameter tubular portion 30B is screwed into the female screw portion 26B of the third body sleeve 26. As a result, the rotor 51 and the rotary sleeve 30 linearly move while rotating with respect to the valve body 11.

An upper end of the rotary sleeve 30 is closed by a plug 27. A supporting column 27A stands upward from the plug 27. The rotatable range of the rotor 51 is limited by a known stopper mechanism including a spiral guide 27B formed by winding a wire rod around the supporting column 27A, an abutment bar 17B hanging from a position shifted from the center of the cap 17A, and a screw component 17D screwed to the spiral guide 27B and abutted to the abutment bar 17B.

A center shaft 31 is passed through the inner side of the small diameter tubular portion 30B of the rotary sleeve 30. The valve element 16 is provided at a lower end portion of the center shaft 31 while a head portion 31H is provided at an upper end portion of the center shaft 31, and the head portion 31H is received by the large diameter tubular portion 30A. In addition, a ball 32 is disposed on the head portion 31H, and the head portion 31H is pressed against a step surface between inner surfaces of the large diameter tubular portion 30A and the small diameter tubular portion 30B by a compression coil spring 33 provided between a ball 32 and the plug 27.

The valve element 16 has a structure in which an entering portion 16B having a diameter smaller than that of a columnar base portion 16A projects downward from the base portion 16A having an outer diameter larger than that of the center shaft 31. In addition, the entering portion 16B has a tapered shape whose diameter gradually decreases downward. Then, when the lower end of the base portion 16A abuts on the opening edge of the valve port 15 to fully close the valve port 15 and when the lower end of the base portion 16A is separated from the opening edge of the valve port 15, the opening area of the valve port 15 is changed by the amount of entry of the entering portion 16B into the valve port 15, and thus the flow rate passing through the valve port 15 is changed. The position of the valve element 16 in the vertical direction J1 is controlled by the motor 50, and the flow rate passing through the valve port 15 is controlled.

The valve element 16 is not limited to the above shape. In addition, the valve element 16 may simply open and close the valve port 15 without, for example, controlling the flow rate passing through the valve port 15. Furthermore, the valve element 16 may have a structure in which a fluid slightly passes through the valve port 15 in a state where the valve port 15 is closed.

As illustrated in Fig. 2, the stator 52 of the motor 50 has a structure in which the outer side of an armature 53 is covered with a waterproof cover 54. The armature 53 includes a plurality of electromagnetic coils 53A and a yoke 53B forming a magnetic path, and has a cylindrical shape as a whole. A connector portion 53C for supplying power to the armature 53 projects out from the outer circumferential surface of the armature 53. As illustrated in Fig. 1, the connector portion 53C has a structure in which a terminal fitting 53K is provided inside a hood 53D made of resin. The armature 53 may not include the yoke 53B.

The waterproof cover 54 is molded on the outer side of the armature 53 and has a tubular shape with a bottomed upper end and an open lower end. Specifically, the waterproof cover 54 includes, excluding the connector portion 53C described above, a cylindrical large diameter portion 55 that covers both upper and lower surfaces and side surfaces of the armature 53 and a cylindrical small diameter portion 56 that projects out from a central portion of an upper surface of the large diameter portion 55 and has a closed upper end with an inner circumferential surface flush with an inner circumferential surface of the armature 53. Furthermore, the connector portion 53C penetrates the side wall 55A of the large diameter portion 55 and projects out to the outer side.

An opening slightly larger than the inner diameter of the armature 53 is formed in the central portion of the bottom wall 55B of the large diameter portion 55 covering the lower surface of the armature 53, and a tubular portion 57 hangs from the opening edge. The tubular portion 57 has a cylindrical shape, where an inner diameter thereof is substantially the same as an inner diameter of the first inner diameter portion 22A of the first body sleeve 21, and an outer diameter thereof is smaller than an outer diameter of the pedestal portion 12Z.

The stator 52 is fitted to the outer side of the rotor case 17. Specifically, when the rotor case 17 is fitted into the stator 52 from the lower end opening of the tubular portion 57 and reaches the regular fitting position, the upper end portion of the rotor case 17 comes into contact with or is adjacent to the upper surface in the stator 52 as illustrated in Fig. 2. Then, the lower surface of the tubular portion 57 is located above and slightly away from the upper surface of the pedestal portion 12Z.

As illustrated in Fig. 4, a seal member 58 is sandwiched between the stator 52 and a stator facing portion 11D of the valve body 11 facing the stator 52 in the vertical direction J1. Here, in the present embodiment, the entire portion of the valve body 11 located laterally from the outer side surface of the rotor case 17 in the first body sleeve 21 and the second body sleeve 25 corresponds to the stator facing portion 11D. In addition, the seal member 58 has a disk shape and is laid across the upper surface of the pedestal portion 12Z and the step surface 25D being flush with the upper surface of the pedestal portion 12Z in the stator facing portion 11D. The outer diameter of the seal member 58 is larger than the outer diameter of the tubular portion 57 of the stator 52, and the inner diameter is slightly smaller than the inner diameter of the tubular portion 57. Furthermore, the thickness of the seal member 58 is about 2 to 4 times the interval between the lower surface of the tubular portion 57 and the upper surface of the pedestal portion 12Z in a state where the tubular portion 57 is disposed at the regular fitting position with respect to the rotor case 17.

Specifically, the seal member 58 is formed by punching a sheet of polyurethane foam. This polyurethane foam has a semi-open cell structure and can be compressed to a compression ratio of 50 to 75%. In addition, since the polyurethane foam has a semi-open cell structure, the polyurethane foam can be compressed with low stress, and after compression, the polyurethane foam has a closed cell structure so that air or water does not pass therethrough. As a result, when the stator 52 is fitted to the rotor case 17, it can be fitted to the regular fitting position without requiring a large force for pressing the seal member 58. Then, a space between the tubular portion 57 and the flange portion 12 is sealed by the pressed seal member 58, and a fitting gap 21Z between the first body sleeve 21 and the second body sleeve 25 is also sealed. In addition, since the upper end portion of the fitting gap 21Z is wider than the introduction surface 22G, the seal member 58 enters the upper end portion of the fitting gap 21Z, and high sealability is obtained.

Note that the seal member 58 is a polyurethane foam having a semi-open cell structure, but is not limited thereto, and may be any member as long as it is pressed between the tubular portion 57 and the flange portion 12, and for example, the seal member may be a foam of an elastomer other than polyurethane having a semi-open cell structure, a polyurethane having a closed cell structure, a foam of another material, and furthermore, a non-foamed elastomer.

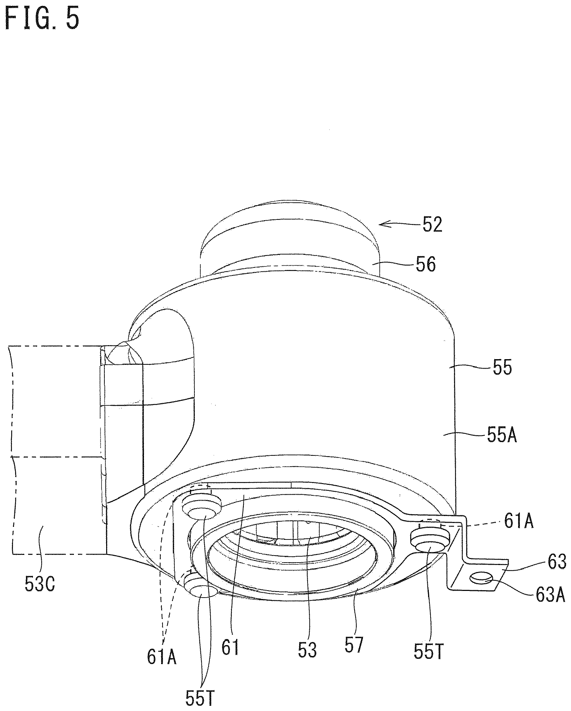

In order to fix the stator 52 to the valve body 11, as illustrated in Fig. 5, a coupling member 60 is fixed to the stator 52. Specifically, the coupling member 60 is formed by punching and bending a sheet metal, and includes a ring portion 61 overlapping an outer side portion of the tubular portion 57 in the lower surface of the stator 52. A plurality of fixing protrusions 55T projects out from the lower surface of the stator 52, and the fixing protrusions 55T pass through the through-holes 61A formed in the ring portion 61 and are thermally caulked, whereby the ring portion 61 is fixed to the large diameter portion 55. A coupling piece 63 hangs from a portion of the ring portion 61 overlapping with the outer edge portion of the lower surface of the stator 52. The lower end portion of the coupling piece 63 is bent at a right angle so as to protrude toward the outer side of the stator 52, where an attachment hole 63A penetrating vertically is provided. When the stator 52 is fitted to the regular fitting position, the lower surface of the coupling piece 63 overlaps the upper surface of the flange portion 12, and the attachment hole 63A can be overlapped with the screw hole 12N (see Fig. 1) of the flange portion 12. In this state, the bolt having passed through the attachment hole 63A is tightened to the screw hole 12N, and the stator 52 is fixed to the valve body 11. Although only one coupling piece 63 is provided in the coupling member 60 in the present embodiment, a plurality of coupling pieces may be provided.

The configuration of the electric valve 10A of the present embodiment has been described above. Next, operations and effects of the electric valve 10A will be described. In order to attach the electric valve 10A to the valve attachment target member 90, for example, the electric valve 10A is separated into the valve body 11 and the stator 52, and the valve body 11 is inserted into the valve mounting hole 91. At this time, the valve body 11 is pushed into the valve mounting hole 91 by aligning the rotational position so that the branch hole 22E of the valve body 11 communicates with the second flow path 92B of the valve attachment target member 90. Furthermore, if the flange portion 12 is pressed to push the valve body 11 into the valve mounting hole 91, the valve body 11 can be pushed into the valve mounting hole 91 with a strong force without applying a load to the rotor case 17. Then, the bolt having passed through the attachment hole 12L of the flange portion 12 is tightened to the screw hole 93 formed at the periphery of the valve mounting hole 91 of the valve attachment target member 90 to fix the valve body 11 to the valve attachment target member 90.

Next, the stator 52 is fitted to the rotor case 17 of the valve body 11. Then, the tubular portion 57 is pressed by the seal member 58, and the space between the flange portion 12 and the tubular portion 57 is sealed. Here, since the seal member 58 is a foam having a semi-open cell structure, the seal member 58 is easily pressed, where pressing of the seal member 58 does not interfere with the fitting operation of the stator 52. Then, the stator 52 is fixed to the valve body 11 by passing a bolt through an attachment hole 63A (see Fig. 5) of the coupling piece 63 provided in the coupling member 60 of the stator 52 and tightening it to the screw hole 12N of the flange portion 12.

Unlike the above procedure, after the stator 52 is assembled to the valve body 11, the valve body 11 may be inserted into the valve mounting hole 91 to fix the valve body 11 to the valve attachment target member 90.

As described above, the stator 52 of the electric valve 10A of the present embodiment has a tubular shape with one end bottomed and the other end opened. The stator 52 is fitted to the outer side of the rotor case 17 included in the valve body 11, and the annular seal member 58 is sandwiched between the stator facing portion 11D included in the valve body 11 and the stator 52 in the axial direction of the valve body 11, thereby restricting water from entering the inside of the stator 52. As a result, the waterproof property of the motor 50 is improved as compared with the conventional art. In order to restrict water from entering inside the stator 52, a seal structure in which the seal member is sandwiched in a radial direction between the inner surface of the stator 52 and the outer surface of the valve body 11 is considered. However as compared with such a seal structure, with a seal structure in which the seal member 58 is sandwiched in an axial direction of the valve body 11 as in the present embodiment, the increase in the fitting resistance of the stator 52 can be suppressed, the assembly of the stator 52 can be easily performed while improving the waterproof property of the motor 50, and size reduction can also be achieved. Moreover, in the present embodiment, the stator 52 is provided with the tubular portion 57 having an outer diameter smaller than that of the seal member 58, and the tubular portion 57 abuts on and bites into the seal member 58, so that high sealability can be obtained.

### [Second Exemplary Embodiment]

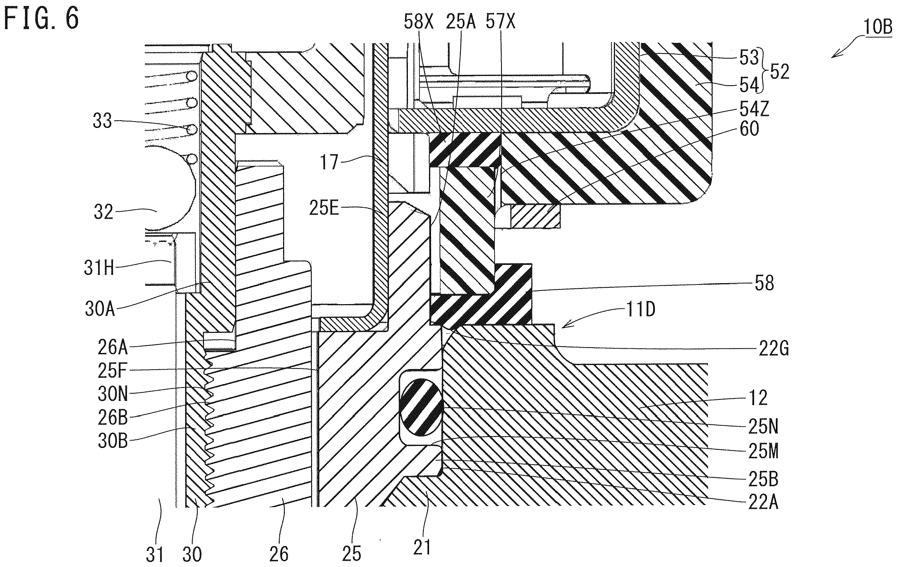

As illustrated in Fig. 6, an electric valve 10B of the present embodiment, which is not covered by the claims, includes a cylindrical intermediate sleeve 57X sandwiched between the stator 52 and the stator facing portion 11D, instead of the tubular portion 57 of the stator 52 in the electric valve 10A of the first embodiment. In addition, a recessed portion 54Z is formed at an inner edge portion of a lower surface of the stator 52, and a disk-shaped seal member 58X made of a material similar to the seal member 58 on the pedestal portion 12Z (e.g., a polyurethane foam having a semi-open cell structure) is received therein. Then, the seal member 58 is pressed between the intermediate sleeve 57X and the stator facing portion 11D, and the seal member 58X is pressed between the intermediate sleeve 57X and the stator 52 to seal between them. According to the structure of the present embodiment, since the intermediate sleeve 57X is a separate member from the stator 52, it is possible to suppress the occurrence of the internal stress due to the difference in the thermal expansion coefficient between the armature 53 and the waterproof cover 54 when the armature 53 generates heat.

### [Third Exemplary Embodiment]

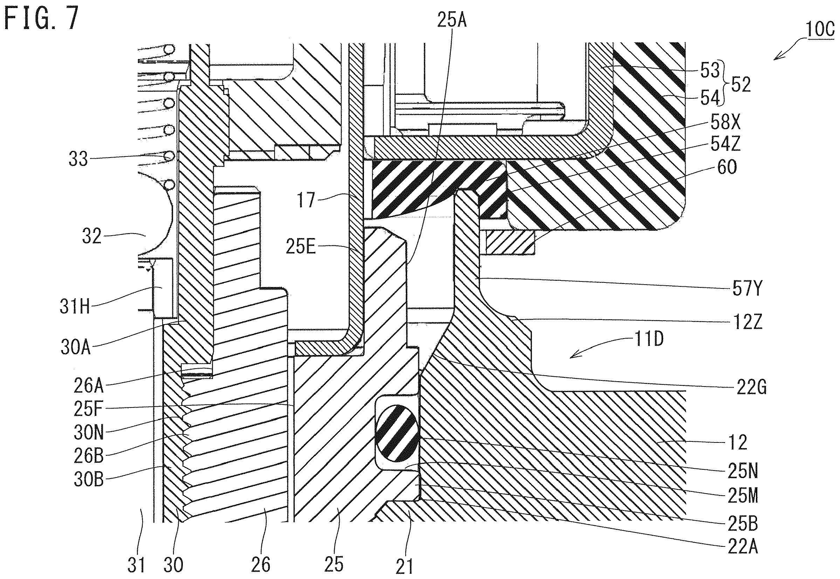

In the electric valve 10A of the first embodiment, the tubular portion 57 abutting on the seal member 58 is provided in the stator 52, but an electric valve 10C of the present embodiment, which is not covered by the claims, is illustrated in Fig. 7, and a tubular portion 57Y is provided in the stator facing portion 11D. Specifically, the tubular portion 57Y has a cylindrical shape and projects upward from the pedestal portion 12Z of the stator facing portion 11D. A recessed portion 54Z similar to that of the second embodiment is formed on a lower surface of the stator 52, and a seal member 58X is accommodated therein. Then, the seal member 58X is pressed between the tubular portion 57Y and the armature 53 of the stator 52 to seal therebetween. The configuration of the present embodiment has the same effects as those of the second embodiment. In addition, an effect that the seal member 58X is accommodated and protected in the recess 54Z of the stator 52 is also obtained.

### [Fourth Embodiment]

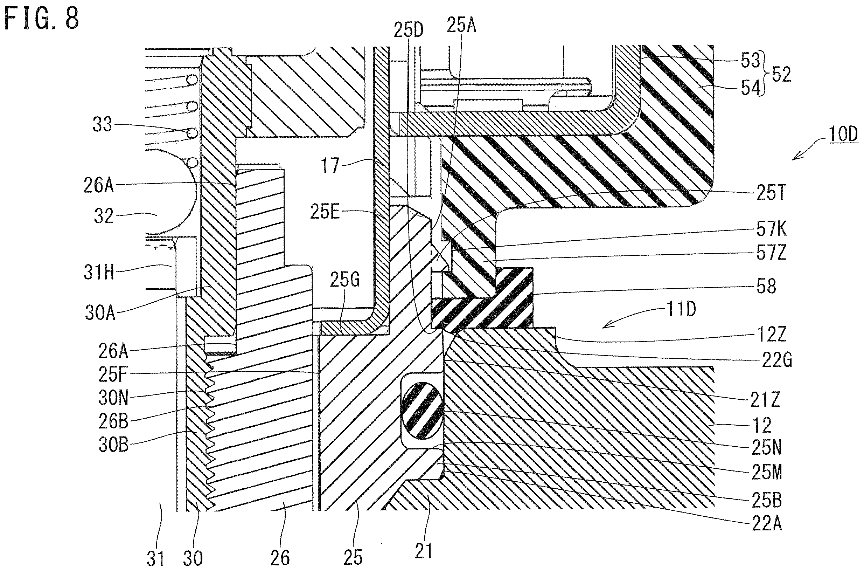

An electric valve 10D of the present embodiment is illustrated in Fig. 8, and has a structure including a tubular portion 57Z having a structure in which a plurality of engaging recesses 57K is provided on the inner side surface of the tubular portion 57 of the electric valve 10A of the first embodiment, and in which an engaging protrusion 25T to be engaged with the engaging recesses 57K is projected out from the valve body 11. When the stator 52 is fitted to the regular position of the valve body 11, the plurality of engaging protrusions 25T and the engaging recesses 57K engage with each other, so that the stator 52 is fixed to the valve body 11.

### [Other Embodiments]

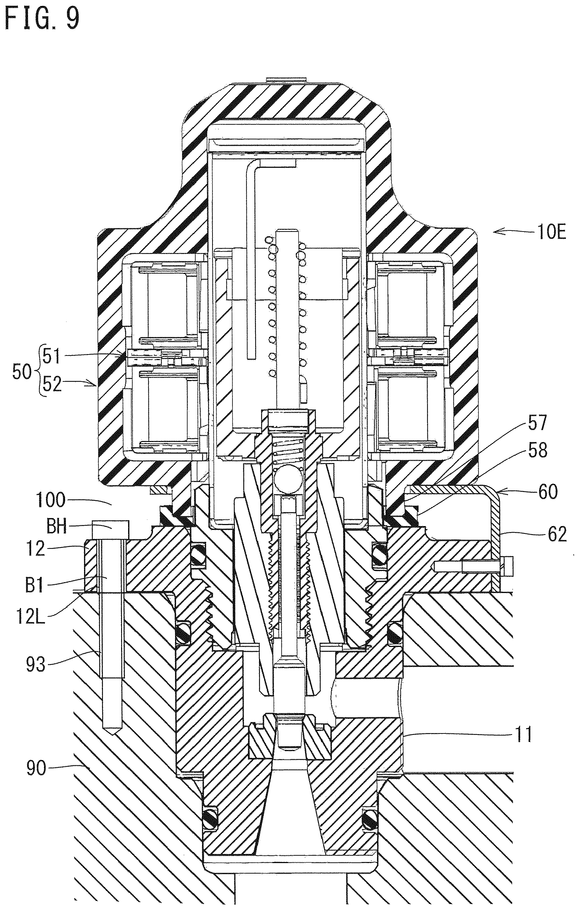

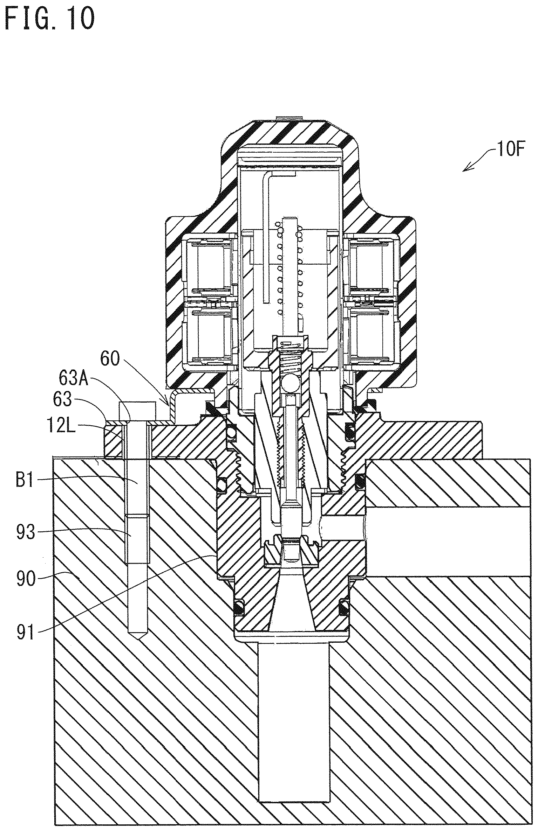

(1) As in an electric valve 10E illustrated in Fig. 9, the plurality of attachment holes 12L of the flange portion 12 may be arranged at positions of the flange portion 12 covered with the stator 52 from above. Further, it may be screwed so as to overlap the outer circumferential surface of the flange portion 12, like the coupling piece 62 of the coupling member 60 shown in the same drawing.
(2) As in an electric valve 10F illustrated in Fig. 10, the attachment hole 63A of the coupling piece 63 of the coupling member 60 described in the first embodiment may be sized to allow the bolt B1 passing through the attachment hole 12L of the flange portion 12 to pass therethrough, so that the bolt B1 may pass through the attachment hole 63A and the attachment hole 12L and tightened to the screw hole 93 of the valve attachment target member 90.
(3) A female screw may be formed on the inner surface of the valve mounting hole 91 in the valve attachment target member 90, and a male screw formed on the outer surface of the insertion portion 13 may be screwed thereto so that the valve body 11 is fixed to the valve attachment target member 90.
(4) In the electric valve 10A of the first embodiment, the coupling piece 63 is provided in the coupling member 60 fixed to the waterproof cover 54 of the stator 52, but the coupling piece 63 may be integrally formed with the waterproof cover 54.

### Reference Signs List

10A to 10F Electric valve
11 Valve body
11D Stator facing portion
17 Rotor case
21 First body sleeve
21Z Fitting gap
22D Tapered portion
22G Introduction surface
25 Second body sleeve
25M Ring groove
25N O-ring
50 Motor
51 Rotor
52 Stator
57, 57Y, 57Z Tubular portion
57X Intermediate sleeve
58, 58X Seal member
62, 63 Coupling piece
90 Valve attachment target member
90A Outer surface
91 Valve mounting hole
92 Flow path
J1 Vertical direction (axial direction)

## Claims

1. An electric valve (10A, 10D to 10F) having a distal end side configured to be inserted into a valve mounting hole (91) opened in an outer surface of a valve attachment target member (90) having a flow path (92) therein and having a motor (50) as a drive source on a proximal end side, and being capable of changing a flow rate of a fluid flowing through the flow path (92), the electric valve (10A, 10D to 10F) comprising:
a valve body (11) having a rotor case (17) extending in an axial direction (J1) of the valve mounting hole (91) and accommodating a rotor (51) of the motor (50) on the proximal end side;
a stator (52) having a tubular shape with one end bottomed and an other end opened, the stator being fitted to an outer side of the rotor case (17);
a stator facing portion (11D) that is formed by enlarging a diameter of an intermediate position in the axial direction (J1) of the valve body (11) and that faces the stator (52) in the axial direction (J1);
a tubular portion (57, 57Z) that projects out toward the stator facing portion (11D); and
an annular seal member (58) that is sandwiched between the stator facing portion (11D) and the tubular portion (57, 57Z) in the axial direction (J1) and restricts water from entering the inside of the stator (52), **characterized in that**
the tubular portion (57, 57Z) is provided integrally with the stator (52), and
the valve body (11) includes
a first body sleeve (21) having an in-valve flow path (92) communicating with the flow path (92), and
a second body sleeve (25) assembled to the inner side of the first body sleeve (21) and having the rotor case (17) fixed to a proximal end portion, and
a fitting gap (21Z) between an inner surface of the first body sleeve (21) and an outer surface of the second body sleeve (25) is open on a surface of the stator facing portion (11D) facing the stator (52) and is covered by the seal member (58).

2. The electric valve (10A, 10D to 10F) according to claim 1, **characterized in that** the seal member (58) has a disk shape having an outer diameter larger than an outer diameter of the tubular portion (57, 57Z) and an inner diameter substantially equal to or smaller than an inner diameter of the tubular portion (57, 57Z).

3. The electric valve (10A, 10D to 10F) according to claim 1 or 2, **characterized in that**
an O-ring groove (25M) that receives an O-ring (25N) in close contact with an inner surface of the first body sleeve (21) is formed on an outer surface of the second body sleeve (25), and
a tapered introduction surface (22G) for introducing the O-ring (25N) is formed on an inner edge portion of the first body sleeve (21), and an end portion of the fitting gap (21Z) on the seal member (58) side is widened.

4. The electric valve (10A, 10D-10F) according to any one of claims 1 to 3, **characterized in that** the seal member (58) is made of urethane foam.

5. The electric valve (10A, 10D-10F) according to any one of claims 1 to 4, **characterized in that** the seal member (58) has a semi-open cell structure.

6. The electric valve (10A, 10D-10F) according to any one of claims 1 to 5, further comprising a coupling piece (63) that protrudes from the stator (52) toward the stator facing portion (11D) and is fixed to the valve body (11).

## Patentansprüche

1. Elektrisches Ventil (10A, 10D bis 10F) mit einer distalen Endseite, die dazu ausgebildet ist, in ein Ventilmontierungsloch (91), das in einer äußeren Oberfläche eines Ventilanbringungszielbauteils (90) mit einem Strömungsweg (92) darin geöffnet ist, eingefügt zu werden, und mit einem Motor (50) als eine Antriebsquelle auf einer proximalen Endseite, und das imstande ist, eine Strömungsrate eines Fluids, das durch den Strömungsweg (92) strömt, zu ändern, mit:
einem Ventilkörper (11) mit einem Rotorgehäuse (17), das sich in einer axialen Richtung (J1) des Ventilmontierungslochs (91) erstreckt und einen Rotor (51) des Motors (50) auf der proximalen Endseite aufnimmt,
einem Stator (52) mit einer rohrförmigen Form, bei der ein Ende mit Boden versehen ist und ein anderes Ende geöffnet ist, der auf einer äußeren Seite des Rotorgehäuses (17) angebracht ist,
einem dem Stator gegenüberliegenden Abschnitt (11D), der durch Vergrößern eines Durchmessers einer Zwischenposition in der axialen Richtung (J1) des Ventilkörpers (11) ausgebildet ist und der dem Stator (52) in der axialen Richtung (J1) gegenüberliegt,
einem rohrförmigen Abschnitt (57, 57Z), der in Richtung des dem Stator gegenüberliegenden Abschnitts (11D) heraussteht; und
einem ringförmigen Dichtungsbauteil (58), das zwischen dem dem Stator gegenüberliegenden Abschnitt (11D) und dem rohrförmigen Abschnitt (57, 57Z) in der axialen Richtung (J1) sandwichartig eingefügt ist und Wasser darin einschränkt, in das Innere des Stators (52) einzutreten, **dadurch gekennzeichnet, dass**
der rohrförmige Abschnitt (57, 57Z) integral mit dem Stator (52) vorgesehen ist, und
der Ventilkörper (11)
eine erste Körperhülse (21) mit einem ventilinternen Strömungsweg (92), der mit dem Strömungsweg (92) in Verbindung steht, und
eine zweite Körperhülse (25), die an der inneren Seite der ersten Körperhülse (21) montiert ist und das Rotorgehäuse (17) an einem proximalen Endabschnitt befestigt aufweist, aufweist, und
eine Anbringungslücke (21Z) zwischen einer inneren Oberfläche der ersten Körperhülse (21) und einer äußeren Oberfläche der zweiten Körperhülse (25) auf einer Oberfläche des dem Stator gegenüberliegenden Abschnitts (11D), die dem Stator (52) gegenüberliegt, offen ist und durch das Dichtungsbauteil (58) bedeckt ist.

2. Elektrisches Ventil (10A, 10D bis 10F) nach Anspruch 1, **dadurch gekennzeichnet, dass** das Dichtungsbauteil (58) eine Scheibenform aufweist, die einen Außendurchmesser größer als ein Außendurchmesser des rohrförmigen Abschnitts (57, 57Z) und einen Innendurchmesser im Wesentlichen gleich oder kleiner als ein Innendurchmesser des rohrförmigen Abschnitts (57, 57Z) aufweist.

3. Elektrisches Ventil (10A, 10D bis 10F) nach Anspruch 1 oder 2, **dadurch gekennzeichnet, dass**
eine O-Ringnut (25M), die einen O-Ring (25N) in engem Kontakt mit einer inneren Oberfläche der ersten Körperhülse (21) aufnimmt, auf einer äußeren Oberfläche der zweiten Körperhülse (25) ausgebildet ist, und
eine konische Einbringungsoberfläche (22G) zum Einbringen des O-Rings (25N) an einem inneren Randabschnitt der ersten Körperhülse (21) ausgebildet ist, und ein Endabschnitt der Anbringungslücke (21Z) auf der Dichtungsbauteil-(58)-Seite aufgeweitet ist.

4. Elektrisches Ventil (10A, 10D-10F) nach einem der Ansprüche 1 bis 3, **dadurch gekennzeichnet, dass** das Dichtungsbauteil (58) aus Urethanschaumstoff ausgebildet ist.

5. Elektrisches Ventil (10A, 10D-10F) nach einem der Ansprüche 1 bis 4, **dadurch gekennzeichnet, dass** das Dichtungsbauteil (58) eine halboffene Zellenstruktur aufweist.

6. Elektrisches Ventil (10A, 10D-10F) nach einem der Ansprüche 1 bis 5, ferner mit einem Kopplungsteil (63), das von dem Stator (52) in Richtung des dem Stator gegenüberliegenden Abschnitts (11D) vorsteht und an dem Ventilkörper (11) befestigt ist.

## Revendications

1. Soupape électrique (10A, 10D à 10F) ayant un côté d'extrémité distale configurée pour être insérée dans un trou de montage de soupape (91) ouvert dans une surface extérieure d'un élément cible de fixation de soupape (90) ayant une voie d'écoulement (92) à l'intérieur et ayant un moteur (50) comme source d'entraînement sur un côté d'extrémité proximale, et pouvant modifier un débit d'un fluide s'écoulant à travers la voie d'écoulement (92), la soupape électrique (10A, 10D à 10F) comprenant :
un corps de soupape (11) ayant un boîtier de rotor (17) s'étendant dans une direction axiale (J1) du trou de montage de soupape (91) et accueillant un rotor (51) du moteur (50) du côté d'extrémité proximale ;
un stator (52) ayant une forme tubulaire, dont une extrémité est fermée et l'autre ouverte, le stator étant monté sur un côté extérieur du boîtier de rotor (17) ;
une partie faisant face au stator (11D) qui est formée par l'agrandissement d'un diamètre d'une position intermédiaire dans la direction axiale (J1) du corps de soupape (11) et qui fait face au stator (52) dans la direction axiale (J1) ;
une partie tubulaire (57, 57Z) qui fait saillie vers la partie tournée vers le stator (11D) ; et
un élément d'étanchéité annulaire (58) qui est pris en sandwich entre la partie faisant face au stator (11D) et la partie tubulaire (57, 57Z) dans la direction axiale (J1) et empêche l'eau de pénétrer à l'intérieur du stator (52), **caractérisé en ce que** la partie tubulaire (57, 57Z) est pourvue intégralement avec le stator (52), et
le corps de soupape (11) comprend
un premier manchon de corps (21) ayant une voie d'écoulement dans la soupape (92) communiquant avec la voie d'écoulement (92), et
un second manchon de corps (25) assemblé sur le côté intérieur du premier manchon de corps (21) et ayant le boîtier de rotor (17) fixé à une partie d'extrémité proximale, et
un espace d'ajustement (21Z) entre une surface intérieure du premier manchon de corps (21) et une surface extérieure du second manchon de corps (25) est ouvert sur une surface de la partie faisant face au stator (11D) faisant face au stator (52) et est couvert par l'élément d'étanchéité (58).

2. Soupape électrique (10A, 10D à 10F) selon la revendication 1, **caractérisée en ce que** l'élément d'étanchéité (58) a une forme de disque dont le diamètre extérieur est supérieur au diamètre extérieur de la partie tubulaire (57, 57Z) et dont le diamètre intérieur est sensiblement égal ou inférieur au diamètre intérieur de la partie tubulaire (57, 57Z).

3. Soupape électrique (10A, 10D à 10F) selon la revendication 1 ou 2, **caractérisée en ce que**
une rainure de joint torique (25M) qui reçoit un joint torique (25N) en contact étroit avec une surface intérieure du premier manchon de corps (21) est formée sur une surface extérieure du second manchon de corps (25), et
une surface d'introduction conique (22G) pour l'introduction du joint torique (25N) est formée sur une partie de bord intérieur du premier manchon de corps (21), et une partie d'extrémité de l'espace d'ajustement (21Z) du côté d'élément d'étanchéité (58) est élargie.

4. Soupape électrique (10A, 10D à 10F) selon l'une quelconque des revendications 1 à 3, **caractérisée en ce que** l'élément d'étanchéité (58) est constitué de mousse d'uréthane.

5. Soupape électrique (10A, 10D à 10F) selon l'une quelconque des revendications 1 à 4, **caractérisée en ce que** l'élément d'étanchéité (58) a une structure cellulaire semi-ouverte.

6. Soupape électrique (10A, 10D à 10F) selon l'une quelconque des revendications 1 à 5, comprenant en outre une pièce d'accouplement (63) qui fait saillie du stator (52) vers la partie faisant face au stator (11D) et qui est fixée au corps de soupape (11).
